# NEUE EUROPÄISCHE PATENTSCHRIFT

(11) **EP 3 082 441 B2**
(45) Veröffentlichungstag und Bekanntmachung des Hinweises auf die Entscheidung über den Einspruch: **27.09.2023**
(45) Hinweis auf die Patenterteilung: 18.12.2019
(21) Anmeldenummer: 14824827.1
(22) Anmeldetag: 18.12.2014
(51) Int. Cl.: A21D 13/38, A21D 13/32, A23G 1/54, A23G 1/00

(54) **VERFAHREN ZUR HERSTELLUNG EINER KOMBINIERTEN DAUERBACKWARE**
METHOD FOR PRODUCING A COMBINED LONG-LIFE BAKED PRODUCT
PROCÉDÉ DE FABRICATION D'UN PRODUIT DE PÂTISSERIE COMBINÉ, DE LONGUE CONSERVATION

(30) Priorität: 19.12.2013 DE 102013226779
(43) Veröffentlichungstag der Anmeldung: 26.10.2016
(73) Patentinhaber: Bahlsen GmbH & Co. KG, 30163 Hannover (DE)
(72) Erfinder: BRETSCHNEIDER, Uwe, 30659 Hannover (DE); WURST, Thomas, 31319 Sehnde (DE); SCHIMMELPFENNIG-WIECHELL, Stefan, 30974 Wennigsen (DE)
(74) Vertreter: Bohmann, Armin K.
(86) Internationale Anmeldenummer: PCT/EP2014/078397
(87) Internationale Veröffentlichungsnummer: WO 2015/091751

(56) Entgegenhaltungen:
- EP-A1- 1 356 739
- EP-A2- 0 914 776
- WO-A1-2014/019704
- WO-A2-2009/127380
- DE-A1- 19 732 036
- DE-C1- 19 741 717
- DE-U1- 20 308 916
- GB-A- 2 502 360

## Beschreibung

Die vorliegende Erfindung betrifft ein Verfahren zur Herstellung eines Schokoladenformkörpers als Füllschicht für eine kombinierte Dauerbackware, Verfahren zur Herstellung einer kombinierten Dauerbackware, einen Schokoladenformkörper und eine Dauerbackware umfassend den Schokoladenformkörper.

Kombinierte Produkte aus Dauerbackware mit unterschiedlichen Füllkomponenten gibt es heute in einer breiten Vielfalt. Bekannt sind Sandwichprodukte aus überwiegend runden Dauerbackwaren, insbesondere Kekse oder Waffeln, und belüfteten fetthaltigen Füllungen. Bekannt sind weiterhin gefüllte Produkte aus zwei oder mehreren Waffelschichten, die mit fließfähigen, wasserfreien Fettfüllungen durch Verbindung mehrerer Waffelplatten und nachfolgendes Schneiden, Stanzen oder Fräsen der gefüllten Waffelblöcke in die für den Verzehr gewünschte Stückgröße hergestellt werden. Andere gefüllte Feingebäcke (Mürbeteiggebäcke, Baisergebäcke, Biskuitmassengebäcke etc.) sind aus den Bereichen der feinen Konditorei, der Patisserie und der industriellen Feingebäckherstellung bekannt.

Einerseits werden Marmeladen und Konfitüren als Füllschicht zum Verbinden von zwei Gebäckstücken benutzt, andererseits kommen fetthaltige, belüftete Füllungen zum Einsatz, die durch intensives Mischen (Schlagen) der Massen hergestellt werden. Eine dritte Möglichkeit besteht in dem Auftragen von dünnen Schichten fließfähiger Süßwarenmassen wie z.B. Nougat, Fettglasuren oder Schokoladen.

Eine Alternative zu diesen Produkten und den damit verbundenen Herstelltechniken stellt das in der DE 19741718 C1 beschriebenen Produkt oder das aus der DE 19741717 C1 bekannte Verfahren dar. Hier wird zwischen zwei plattenförmigen Gebäcken eine dritte plattenförmige Komponente durch eine Fügemasse, die jeweils zwischen dem Gebäck und dem plattenförmigen Schokoladenkörper eingebracht wurde, fest verbunden. Das Produkt zeichnet sich dadurch aus, dass die Seitenflächen der plattenförmigen Füllung im Wesentlichen mit den Seitenbereichen der Gebäckteile fluchten.

In der DE 19741717 C1 wird das Verfahren zur Herstellung durch die Verbindung dreier praktisch fester plattenförmiger Körper mittels einer Fügemasse beschrieben. Nachteile dieses Verfahrens sind der hohe technische Aufwand für die Anlagentechnik, die geringe Flexibilität des Verfahrens gegenüber Größen und Formänderungen und die hohen Aufwendungen für das Handling der Produkte und Halbfabrikate sowie der große Energie- und Arbeitsaufwand.

Weiterhin sind verschiedene Verfahren zum Ausformen von Schokoladen aus dem Stand der Technik bekannt. In der EP 1346643 B1 und der WO 2004/068963 A1 werden Verfahren und Vorrichtungen zum Ausformen von Schokoladenhülsen durch Verdrängen von vorkristallisierter, flüssiger Schokolade beschrieben, welche vorher in eine Kavität einer Schokoladenform eingebracht wurde. Dabei werden mit diesem Verfahren Hülsen mit einer möglichst gleichmäßigen Wandstärke hergestellt, die in den nachfolgenden Produktionsschritten gefüllt und gekühlt werden und zu pralinen- oder riegelartigen Endprodukten führen. Derartige Kaltstempelverfahren werden auch Frozen-Cone-Verfahren genannt und haben zum Ziel, im Vergleich zum klassischen Hülsengussverfahren eine gleichmäßigere Wanddicke zu erreichen und den produktionstechnischen Aufwand zur Herstellung der Hülsen zu minimieren. Im Gegensatz zum klassischen Hülsengießverfahren wird die für die Hülsenherstellung notwendige Menge an Schokolade in die Formenkavität dosiert und dann mittels gekühlten Stempelwerkzeugs verformt und fixiert.

Eine weitere Möglichkeit zur Herstellung von Hülsen wird in der Schrift DE 10305301 B3 beschrieben. Hier wird die innere Form der künftigen Hülse über die Geometrie des Stempels genau definiert. Die Dicke der Wände und die äußere Form variieren leicht. Sie hängen von einer Reihe von Parametern wie der Stempelgeometrie, der Stempeltemperatur, der Dauer des Eintauchens in das Schokoladenbad, der Schokoladenrezeptur, dem Grad der Vorkristallisation und der Temperatur sowie scheinbaren Viskosität der Schokolade und weiteren Faktoren ab. Typisch für diese Produkte sind außen leicht verlaufende, fließende Konturen, wie sie auch bei manueller Fertigung üblich sind.

In den Schriften EP 356741 A1 sowie EP 1714559 B1 werden Vorrichtungen zur Herstellung von Schokoladenartikeln auf einem Transportband durch Verformen und schnelles Abkühlen von Schokolade in einem Formwerkzeug beschrieben. Beide Schriften stellen eine Weiterentwicklung des EP 1346643 B1 derart dar, dass nun keine Ausformung durch Verformen der flüssigen Schokolade mittels eines Stempelwerkzeuges in einer konkav ausgebildeten Kavität erfolgen muss, sondern auf einem flachen Transportband, welches aus Kunststoff oder Metall gefertigt ist.

DE 197 32 036 A1 offenbart ein Verfahren zum Herstellen von Verzehrgütern mit einer äußeren Schale, die durch einen in eine Form eintauchenden Stempel fließgepresst hergestellt wird, wobei der Taupunkt der das Verzehrgut umgebenden Atmosphäre unter der Temperatur des Stempels gehalten wird.

Somit kennt der Stand der Technik mehrschichtige Dauerbackwaren, die aus zwei überwiegend flach ausgebildeten Gebäckstücken und einer tafelförmigen Zwischenlage bestehen. Allerdings kann der Stand der Technik keinerlei Ansätze liefern, wie die Zwischenlage aus Schokolade präzise ausgeformt, als tafelförmige Schokolade deutlich wahrnehmbar und fest mit den Gebäckstücken verbunden werden kann.

Es ist daher Aufgabe der Erfindung, ein Produkt und ein Verfahren anzugeben, das bei einfacher und kostengünstiger Ausführbarkeit eine sichere und zuverlässige Herstellung eines Sandwichproduktes als kombinierte Dauerbackware mit einem plattenförmig erscheinenden Schokoladenformkörper als Füllkomponente ermöglicht.

Gelöst wird die Aufgabe durch den Gegenstand der beigefügten unabhängigen Ansprüche; bevorzugte Ausführungsformen ergeben sich aus den beigefügten abhängigen Ansprüchen.

Genauer wird die Aufgabe in einem ersten Aspekt gelöst durch ein Verfahren zur Herstellung eines Schokoladenformkörpers (6) als Füllschicht für eine kombinierte Dauerbackware (16), umfassend die Schritte:
Bereitstellen einer Schokoladenportion (1) auf einer Trägervorrichtung (2), Formen der Schokoladenportion (1) zu dem, eine äußere Kontur der Füllschicht bildenden Schokoladenformkörper (6) mittels eines ersten Formwerkzeugs (3) und eines zweiten Formwerkzeugs (4), wobei
durch das erste Formwerkzeug (3) eine Form eines Umfangs des Schokoladenformkörpers (6) definiert wird, und
durch das zweite Formwerkzeug (4) eine Form einer Kavität des Schokoladenformkörpers (6) definiert wird, wobei die Kavität als Rahmen ausgebildet ist, und wobei ein Innenraum der Kavität in mindestens einem folgenden Arbeitsschritt gefüllt wird.

In einer Ausführungsform des ersten Aspektes ist vorgesehen, dass die Schokoladenportion (1) vorkristallisierte Schokolade umfasst.

In einer Ausführungsform des ersten Aspektes ist vorgesehen, dass die Schokoladenportion (1) durch ein erstes Formwerkzeug (3) und/oder ein zweites Formwerkzeug (4) verformt und durch schnelle Wärmeabfuhr während der Verformung amorph verfestigt wird.

Genauer wird die Aufgabe in einem zweiten Aspekt gelöst durch ein Verfahren zur Herstellung einer kombinierten Dauerbackware (16), umfassend die Schritte:
- Herstellung eines Schokoladenformkörpers (6) nach dem Verfahren gemäß des ersten Aspektes, einschließlich einer jeden Ausführungsform davon, wobei die Kavität als Rahmen ausgebildet ist,
- Bereitstellung zumindest eines ersten Gebäckteils (9) und eines zweiten Gebäckteils (10),
- Lagegenaue Positionierung des Schokoladenformkörpers (6), auf dem ersten Gebäckteil (9),
- Einbringung einer Füllmasse (11, 12, 13) in die Kavität des Schokoladenformkörpers (6),
- Lagegenaue Positionierung des zweiten Gebäckteils (10) auf dem gefüllten Schokoladenformkörper (6), wobei
eine Verbindung zwischen Schokoladenformkörper (6) und erstem Gebäckteil (9) und/oder zweitem Gebäckteil (10) durch Kristallisation der Füllmasse (11, 12, 13) erfolgt.

Genauer wird die Aufgabe in einem dritten Aspekt gelöst durch ein Verfahren zur Herstellung einer kombinierten Dauerbackware (16), umfassend die Schritte:
- Herstellung eines Schokoladenformkörpers (6) nach dem Verfahren gemäß des ersten Aspektes, einschließlich einer jeden Ausführungsform davon,
- Einbringung einer Füllmasse (11, 12, 13) in die Kavität des Schokoladenformkörpers (6),
- Bereitstellung zumindest eines ersten Gebäckteils (9) und eines zweiten Gebäckteils (10),
- Positionierung des ersten Gebäckteils (9) über der Kavität des gefüllten Schokoladenformkörpers (6), wobei eine Verbindung des ersten Gebäckteils (8) mit dem Schokoladenformkörper (6) durch Kristallisation der in die Kavität eingebrachten Füllmasse (11, 12, 13) erfolgt, und
- Positionierung des zweiten Gebäckteils (10) auf einer der Kavität gegenüberliegenden Seite des gefüllten Schokoladenformkörpers (6), wobei eine Verbindung des zweiten Gebäckteils (10) mit dem Schokoladenformkörper (6) durch Kristallisation einer zwischen Schokoladenformkörper (6) und zweitem Gebäckteil (10) eingebrachten Fügemasse erfolgt.

Genauer wird die Aufgabe in einem vierten Aspekt gelöst durch einen Schokoladenformkörper, wobei dieser mit einem Verfahren gemäß des ersten Aspektes, einschließlich einer jeden Ausführungsform davon hergestellt ist und mit zumindest einem festen und/oder zumindest einem halbfesten und/oder zumindest einem flüssigen Bestandteil gefüllt ist.

In einer Ausführungsform des vierten Aspektes ist der Schokoladenformkörper mit Schokolade und/oder mit fetthaltigen Füllmassen und/oder mit wasserhaltigen Füllmassen und/oder mit stückigen Bestandteilen gefüllt.

In einer Ausführungsform des vierten Aspektes ist der Schokoladenformkörper (6) ein festes und/oder formstabiles Element.

Genauer wird die Aufgabe in einem fünften Aspekt gelöst durch eine Dauerbackware (16), umfassend einen Schokoladenformkörper (6) gemäß des vierten Aspektes, einschließlich einer jeden Ausführungsform davon.

In einer Ausführungsform des fünften Aspektes ist vorgesehen, dass zumindest ein, insbesondere flaches, Gebäckteil (9, 10) auf dem Schokoladenformkörper (6) positioniert ist.

In einer Ausführungsform des fünften Aspektes ist vorgesehen, dass äußere Konturflächen des Schokoladenformkörpers (6) plan sind und senkrecht zu dem ersten Gebäckteil (9) und/oder dem zweiten Gebäckteil (10) orientiert sind.

In einer Ausführungsform des fünften Aspektes ist vorgesehen, dass eine Verbindung des Schokoladenformkörpers (6) mit einem ersten Gebäckteil (9), das insbesondere über der Kavität des Schokoladenformkörpers positioniert ist, durch Kristallisation einer in die Kavität eingebrachten Füllmasse erfolgt und/oder eine Verbindung des Schokoladenformkörpers (6) mit einem zweiten Gebäckteil (10), das insbesondere auf einer der Kavität gegenüberliegenden Seite des Schokoladenformkörpers (6) positioniert ist, durch Kristallisation einer zwischen Schokoladenformkörper (6) und zweitem Gebäckteil (10) eingebrachten Fügemasse erfolgt.

Das durch die Ansprüche definierte erfindungsgemäße Verfahren schafft eine neue Möglichkeit, einen definierten plattenförmig erscheinenden Formkörper herzustellen. Dieser Formkörper kann als Füllungskomponente einer kombinierten Süßware oder einer kombinierten Dauerbackware mit einer dazwischenliegenden Schicht (Formkörper) zur Anwendung gebracht werden.

Der durch die Ansprüche definierte erfindungsgemäße Formkörper ist ein Schokoladenformkörper. Dazu wird der Formkörper massiv aus Schokolade oder in Kombination mit unterschiedlichen Füllkomponenten gefertigt. Die Füllkomponenten sind insbesondere Schokolade, fetthaltige oder wasserhaltige Füllungen, Süßwarenfüllmassen und/oder stückige Ingredienzen, mit denen der Schokoladenformkörper füllbar ist. Das durch die Ansprüche definierte erfindungsgemäße Verfahren ermöglicht hierbei Füllungsanteile über 60% und Durchmesser von stückigen Ingredienzen von maximal 0,8 x Randhöhe des inneren Schokoladenrandes der den Formkörper umschließenden äußeren Rahmenkontur.

Unter Schokolade ist im Sinne der Erfindung Schokolade gemäß der Kakaoverordnung aber auch jede andere fetthaltige Süßwarenmasse, die bei Normaltemperatur (20°C) durch vorherige Kristallisation der darin befindlichen Fette eine feste Struktur annimmt. Als Füllungskomponente kann diese mit einer weiteren Füllmasse und/oder mit zugegebenen stückigen Ingredienzen wie insbesondere Nüssen, Mandeln, Krokant oder ähnlichem, ausgestaltetsein.

Das durch die Ansprüche definierte erfindungsgemäße Verfahren zur Herstellung eines bevorzugterweise plattenförmigen Schokoladenformkörpers umfasst die folgenden Schritte: Zunächst wird eine Schokoladenportion auf einer Trägervorrichtung bereitgestellt. Die Trägervorrichtung ist bevorzugt ein Transportgurt oder ein Transportband. Anschließend wird die Schokoladenportion zu dem Formkörper geformt. Dazu werden ein erstes Formwerkzeug und ein zweites Formwerkzeug verwendet. Erfindungsgemäß wird durch das Zusammenwirken des ersten Formwerkzeuges und des zweiten Formwerkzeuges eine definierte äußere Kontur und eine definierte innere Form einer Kavität ausgeformt, wobei die Kavität als Rahmen ausgebildet ist.

Bevorzugt ist vorgesehen, dass die Schokoladenportion vorkristallisierte Schokolade umfasst. Alternativ können fetthaltigen Massen eingesetzt werden. Zusätzlich ist vorgesehen, dass die Schokoladenportion während der Verformung die Schokoladenportion durch schnelles Abführen von Wärme aus der Schokoladenmasse amorph verfestigt wird, so dass ein ausreichend verfestigter, formstabiler Schokoladenformkörper entsteht, der erst in einem nachgelagerten Schritt unter definierten Kühlbedingungen kristallisiert. Dies erlaubt eine aufwandsarme Fertigung eines für die Herstellung einer kombinierten Dauerbackware, insbesondere für die Herstellung eines Sandwichprodukts, ausreichend formstabilen Schokoladenformkörpers.

Das erste Formwerkzeugelement und/oder das zweite Formwerkzeugelement weisen bevorzugt eine Temperatur auf, die geringer ist als die Temperatur der Schokoladenportion. Insbesondere weist das erste und zweite Formwerkzeug eine Oberflächentemperatur zwischen 15°C und -25°C auf. Besonders bevorzugt weist das erste Formwerkzeug und/oder das zweite Formwerkzeug eine Oberflächentemperatur aus einem Bereich zwischen -18°C bis -22°C auf.

Um eine optimale Kühlung des Schokoladenformkörpers zu gewährleisten, ist insbesondere vorgesehen, dass die Trägervorrichtung den Schokoladenformkörper zusätzlich kühlt. Als besonders bevorzugt hat sich bei einem 0,7 mm dicken Kunststoffband eine Temperatur des Kühlmediums von - 15°C bis - 18°C erwiesen

Zur Formgebung des Umrisses des Schokoladenformkörpers wird das erste Formwerkzeug vorteilhafterweise auf die Trägervorrichtung aufgesetzt, wobei das erste Formwerkzeug die Schokoladenportion umschließt. Somit ist ein Umriss des Schokoladenformkörpers sehr flexibel fertigbar. Insbesondere wird das erste Formwerkzeug dicht auf die Trägervorrichtung aufgelegt, so dass ein Austreten der Schokoladenportion zwischen Trägervorrichtung und erstem Formwerkzeug nicht möglich ist. Somit bilden Trägervorrichtung und erstes Formwerkzeug eine Form um die Schokoladenportion.

Besonders bevorzugt ist vorgesehen, dass das zweite Formwerkzeug nach dem Aufsetzen des ersten Formwerkzeugs auf die Schokoladenportion gepresst wird. Auf diese Weise wird die Schokoladenportion insbesondere verformt, um die durch das erste Formwerkzeug auf der Trägervorrichtung gebildete Form auszufüllen. Außerdem ist bevorzugt vorgesehen, dass durch das Aufpressen des zweiten Formwerkzeugs die Schokoladenportion gekühlt wird, um einen formstabilen Schokoladenformkörper zu erhalten.

Durch das zweite Formwerkzeug wird eine Kavität in dem Schokoladenformkörper definiert. Dies erlaubt insbesondere ein Füllen des Schokoladenformkörpers mit weiteren Ingredienzen.

Um das Transportband, das insbesondere ein Kunststoffgut ist, nicht zu beschädigen, ist es notwendig und sinnvoll, den Anpressdruck zwischen dem ersten Formwerkzeug und/oder dem zweiten Formwerkzeug und den über eine Bodenunterstützung, insbesondere eine Gegenplatte, laufenden Band zu begrenzen. Das wird vorteilhafterweise durch eine kraftgesteuerte Fahrweise eines Antriebssystems und/oder durch die mittels Federkraft begrenzte maximale Anpresskraft des von oben auf das Band und Trägersystem wirkenden ersten Formwerkzeugs und zweiten Formwerkzeugs erreicht. Für den Fall, dass sich das Transportband kontinuierlich mit gleicher Geschwindigkeit bewegt, ist die gesamte Einheit aus von oben wirkenden Formwerkzeugen und unten wirkender Trägervorrichtung im Vorschub während der Ausformung und amorphen Fixierung mit der Bandgeschwindigkeit synchron mitfahrend auszuführen. Nach dem Anheben des ersten Formwerkzeuges sowie des zweiten Formwerkzeugs vom Transportband und nach dem Freigeben der ausgeformten Schokoladenformprodukte läuft dann die gesamte Einheit wieder in die Ausgangsposition zurück, um danach den nächsten Arbeitstakt auszuführen. Zur Sicherstellung einer ausreichenden Produktivität ist das erste Formwerkzeug und das zweite Formwerkzeug im Mehrfachnutzen auszuführen, so dass immer mehrere Kavitäten über die Arbeitsbreite der Anlage als auch vorteilhafterweise mehrere Reihen nacheinander im gleichen Arbeitsschritt geformt werden. Die Gestaltung des ersten Formwerkzeuges und des zweiten Formwerkzeugs definiert die künftige Form der amorph verfestigten äußeren Kontur, wobei gemäß der vorliegenden Erfindung rahmenartige Formen erzeugt werden.

Das durch die Ansprüche definierte erfindungsgemäße Verfahren zum Herstellen eines Schokoladenformkörpers wird insbesondere verwendet, um sandwichartige Dauerbackwaren zu fertigen. Die Dauerbackware ist sandwichartig ausgestaltet und umfasst zwei im Wesentlichen plattenförmigen Gebäckteile und eine zwischen diesen Gebäckteilen befindliche, deutlich sichtbare, Zwischenlage, deren äußere Kontur durch den Schokoladenformkörper gebildet wird. Zusätzlich wird dieser Schokoladenformkörper bevorzugt gefüllt.

Das durch die Ansprüche definierte erfindungsgemäße Verfahren zum Herstellen der Dauerbackware umfasst in einer ersten Variante die folgenden Arbeitsschritte:
- Herstellen oder Bereitstellen von Gebäckteilen;
- Bereitstellen der Schokoladenportion;
- Portionieren der vortemperierten Schokoladenportion auf der Trägervorrichtung
- Formen des rahmenförmigen Schokoladenkörpers und amorphes Fixieren der Schokoladenportion in einer Formungsstation durch schnelles Abführen der Wärme aus dem vorgeformten Schokoladenformkörper;
- Freigeben des durch amorphe Fixierung formstabilen Schokoladenkörpers;
- Lagegenaues Aufsetzen und kraftgesteuertes Andrücken des amorph verfestigten formstabilen Schokoladenkörpers auf ein lagegenau präsentiertes Gebäck, welches vorher optional an der Oberfläche erwärmt wurde oder auf das ein oder mehrere Tropfen flüssiger Schokolade (Tropfenmenge ca. 0,1g) dosiert wurden. (Das kraftgesteuerte Aufsetzen ist notwendig, um Unterschiede in den Gebäckhöhen auszugleichen.)
- Einbringen von weiteren Ingredienzen, Füllungen aus fetthaltigen, wasserhaltigen oder zuckerbasierten Massen oder Schäumen und/oder Schokolade in das freie Volumen des auf das Gebäckstück aufgesetzten Schokoladenform körpers
- Lagegenaues Aufsetzen und kraftgesteuertes Andrücken des zweiten Gebäckstückes auf den lagegenau vorliegenden Verbund aus Gebäck und gefülltem Schokoladenformkörper.
- Optional kann mittels einer gesonderten Vorrichtung nach der Grobmontage noch einmal ein Ausrichten der Gebäckstücke zueinander und ein definiertes Andrücken der Gebäckstücke zu dem dazwischenliegenden Schokoladenformkörper erfolgen.
- Endkühlung der kombinierten Dauerbackware oder kombinierten Süßware derart, dass die Füllung ausreichend auskristallisiert ist und das Produkt nach Verlassen des Kühlsystems sicher weiterverarbeitet werden kann und lagerstabil ist.

In einer zweiten Variante umfasst das durch die Ansprüche definierte erfindungsgemäße Verfahren zur Herstellung einer Dauerbackware die folgenden Arbeitsschritte:
- Herstellen oder Bereitstellen von Gebäckteilen;
- Bereitstellen der Schokoladenportion;
- Aufbringen der Schokoladenportion auf ein Trägersystem;
- Formen des rahmenförmigen, wannenartigen oder quaderförmigen Schokoladenkörpers und amorphes Fixieren der Schokoladenportion in einer Formungsstation durch schnelles Abführen der Wärme aus dem vorgeformten Schokoladenformkörper;
- Freigeben des durch amorphe Fixierung formstabilen Schokoladenform körpers;
- Optional: Einbringen von weiteren Ingredienzen, Füllungen aus fetthaltigen, wasserhaltigen oder zuckerbasierten Massen oder Schäumen und/oder Schokolade;
- Montage eines ersten Gebäckstückes unmittelbar nach dem Einbringen der Füllungskomponenten in den Schokoladenformkörper oder mit einem bereits teilweise oder überwiegend fixierten gefüllten Schokoladenformkörper mittels Fügemasse und genauer Ausrichtung sowie definierten Andrückens von Schokoladenformkörper und erstem Gebäckstück und anschließender Fixierung der Verbindung durch Kristallisation der in den Füllungskomponenten oder der Fügemasse befindlichen Fette;
- Kühlung und Kristallisation des aufgebauten Schokoladenformkörpers und nachfolgendes Trennen des Verbundes aus gefülltem Schokoladenformkörper und erstem Gebäckstück von der Trägervorrichtung;
- Endmontage des Sandwiches durch Bereitstellen eines zweiten Gebäckteiles mittels Fügemasse und lagegenaues Positionieren des Verbundes aus Schokoladenformkörper und erstem Gebäck zum zweiten Gebäck, genaue Ausrichtung der Gebäckstücke zueinander und definiertes Andrücken von zweitem Gebäckteil auf den vorgefertigten Verbund aus erstem Gebäckteil und Schokoladenformkörper und anschließender Fixierung der Fügemasse durch Kristallisation der in der Fügemasse befindlichen Fette;
- Optional nachgeschaltetes Endkühlrn der sandwichartigen Dauerbackware.

Vorteilhafterweise wird das Auspressen und Auflegen der Füllschicht durch vertikales Auspressen der Füllschicht auf das Gebäckunterteil und Schneiden der Füllschicht mit einem, vorzugsweise beheizten oder vibrierenden, Draht oder einem, vorzugsweise beheizten oder vibrierenden, Messer ausgeführt.

Bevorzugt ist weiterhin vorgesehen, dass die Kühlbedingungen so gewählt werden, dass sowohl die optimale Kristallisation des Schokoladenformkörpers als auch der Erhalt der gewünschten Texturmerkmale der Gebäckteile sichergestellt ist.

Zusätzlich betrifft die Erfindung einen Schokoladenformkörper, der nach dem durch die Ansprüche definierten erfindungsgemäßen Verfahren hergestellt ist. Der Schokoladenformkörper ist insbesondere als separates Element verwendbar und/oder Teil einer mehrschichtigen Süßware, bevorzugt einer Dauerbackware.

Bevorzugt ist der Schokoladenformkörper ein festes, formstabiles Element. Somit ist mit dem Schokoladenformkörper vorteilhafterweise eine hochwertige und stabile Süßware oder Dauerbackware herstellbar.

Der Schokoladenformkörper umfasst bevorzugt eine äußere Hülle aus Schokolade und eine davon abweichende Füllung aus einer anderen fetthaltigen Masse und/oder wasserhaltigen Masse.

Besonders bevorzugt umfasst der Schokoladenformkörper eine äußere Hülle aus Schokolade und eine darin befindliche Süßwarenmasse, die vorzugsweise aus Marzipan, Persipan, Nougat oder ähnlichem besteht.

Der Schokoladenformkörper umfasst insbesondere sensorisch wahrnehmbare, stückige Ingredienzen, wie insbesondere Nüsse und/oder Mandeln und/oder Krokant und/oder getrocknete Fruchtstücke und/oder Cerealien.

Der Schokoladenformkörper umfasst bevorzugt eine Kavität, in die eine wasserhaltige Füllung als Marmelade, Konfitüre oder andere Fruchtzubereitung einbringbar ist, wobei entweder nach einem Dosieren eine ausreichende Verfestigung stattfindet oder die wasserhaltige Füllung in einem oder mehreren Füllvolumen innerhalb des Schokoladenformkörpers positioniert ist.

Alternativ oder zusätzlich umfasst der Schokoladenformkörper eine Karamellfüllung, wobei entweder nach einem Dosieren eine ausreichende Verfestigung stattfindet oder die Karamellfüllung in einem oder mehreren Füllvolumen innerhalb des Schokoladenformkörpers positioniert ist.

Die Erfindung betrifft weiterhin eine durch die Ansprüche definierte erfindungsgemäße Dauerbackware, die einen durch die Ansprüche definierten erfindungsgemäßen Schokoladenformkörper umfasst. Dazu ist die Dauerbackware vorteilhafterweise sandwichartig ausgeführt. Somit umfasst die Dauerbackware eine Zwischenlage aus Schokolade, wobei die Zwischenlage insbesondere eine massive Schokolade ist.

Bevorzugt umfasst die Dauerbackware zwei im Wesentlichen plattenförmige Gebäckteilen und eine zwischen diesen befindliche, insbesondere deutlich sichtbare, feste Zwischenlage, die durch den Schokoladenformkörper gebildet ist. Die plattenförmigen Gebäckteile weisen hierfür bevorzugt im Wesentlichen die gleiche äußere Kontur auf.

Der Abstand zwischen den beiden im Wesentlichen plattenförmigen Gebäckteilen liegt vorzugsweise in einem Bereich zwischen 2 mm und 12 mm. Dabei füllt der Schokoladenformkörper den zwischenliegenden Raum stets gleichmäßig und formgenau aus. Die Seitenkanten des als Zwischenlage eingesetzten Schokoladenformkörpers verlaufen vorteilhafterweise plan zu den Rändern der Gebäckteile und sind insbesondere senkrecht zu den Gebäckteilen angeordnet.

Bevorzugt entsprechen die Eigenschaften der aus dem Schokoladenformkörper gebildeten Zwischenlage einer Schokoladentafel von gleicher Dicke und gleichem Aufbau, insbesondere hinsichtlich typischer sensorischer Erwartungen eines Konsumenten.

Die Dauerbackware kennzeichnet sich insbesondere dadurch aus, dass ein Abstand der beiden Gebäckteile und damit die Höhe der Zwischenlage mindestens 1,5 mm, maximal 15 mm, vorzugsweise 3 bis 6 mm beträgt. Die Zwischenlage ist außerdem bevorzugt mit planen, vorzugsweise senkrecht zu den Gebäckteilen stehenden Seitenflächen, oder alternativ mit Kanten mit einem Randwinkel von 91° bis 10° ausgeführt.

Weiterhin ist vorteilhafterweise vorgesehen, dass die planen Seitenflächen der Zwischenlage im Wesentlichen parallel und leicht nach innen versetzt zu den Kanten der Gebäckteile ausgebildet sind.

Insbesondere ist die seitliche Kontur so ausgebildet ist, dass die planen Seitenflächen der Zwischenlage im Wesentlichen mit den Seitenkanten der Gebäckteile abschließen. Alternativ ist die seitliche Kontur insbesondere so ausgebildet, dass die planen Seitenkanten der Füllmasse über die Seitenkanten der Gebäckteile hinausragen.

Bevorzugt weisen die Seitenflächen der Zwischenlage einen schokoladentypischen, seitenmatten Glanz auf.

Vorteilhafterweise sind die Gebäckteile und die Zwischenlage fest verbunden und daher nicht mehr zerstörungsfrei zu trennen.

Ein Gewichtsverhältnis von Gebäckteilen zu Zwischenlage liegt vorteilhafterweise in einem Bereich von 3 zu 1 bis 1 zu 5. Besonders bevorzugt liegt das Gewichtsverhältnis von Gebäckteilen zu Zwischenlage im Bereich von 2 zu 1 bis 1 zu 1,5.

Die Zwischenlage der Dauerbackware erzeugt bevorzugt bei Verzehr im Temperaturbereich von 20°C bis 25°C einen für eine Schokoladentafel vergleichbarer Dicke typischen sensorischen Eindruck.

Die Erfindung wird nun anhand von Ausführungsbeispielen unter Zuhilfenahme der beigefügten Zeichnungen im Detail beschrieben. In den Zeichnungen ist:
- Figur 1: eine schematische Darstellung eines ersten Schritts des Verfahrens gemäß einem ersten Ausführungsbeispiel der Erfindung,
- Figur 2: eine schematische Darstellung eines zweiten Schritts des Verfahrens gemäß dem ersten Ausführungsbeispiel der Erfindung,
- Figur 3: eine schematische Darstellung eines dritten Schritts des Verfahrens gemäß dem ersten Ausführungsbeispiel der Erfindung,
- Figur 4: eine schematische Darstellung eines vierten Schritts des Verfahrens gemäß dem ersten Ausführungsbeispiel der Erfindung,
- Figur 5: eine schematische Darstellung eines fünften Schritts des Verfahrens gemäß dem ersten Ausführungsbeispiel der Erfindung,
- Figur 6: eine schematische Darstellung eines sechsten Schritts des Verfahrens gemäß dem ersten Ausführungsbeispiel der Erfindung,

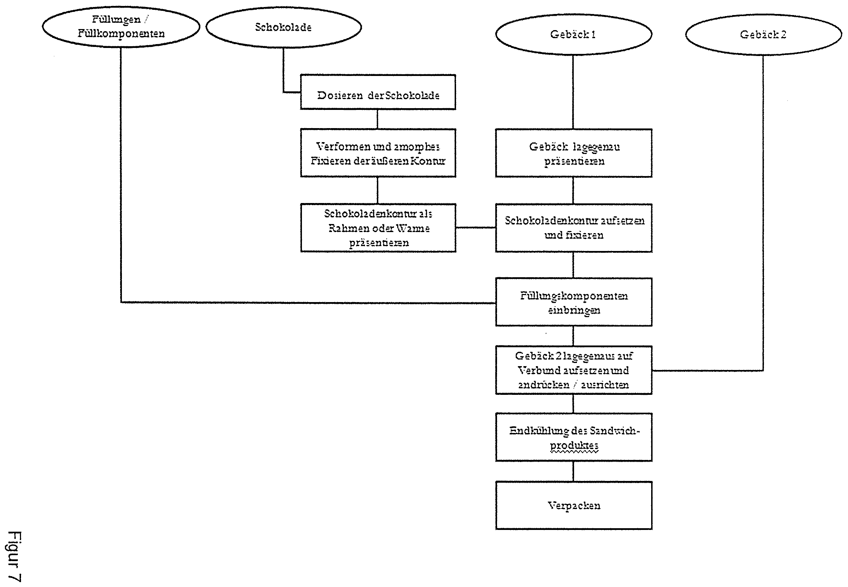

- Figur 7: eine schematische Übersicht über den Ablauf des Verfahrens gemäß einem zweiten Ausführungsbeispiel der Erfindung,

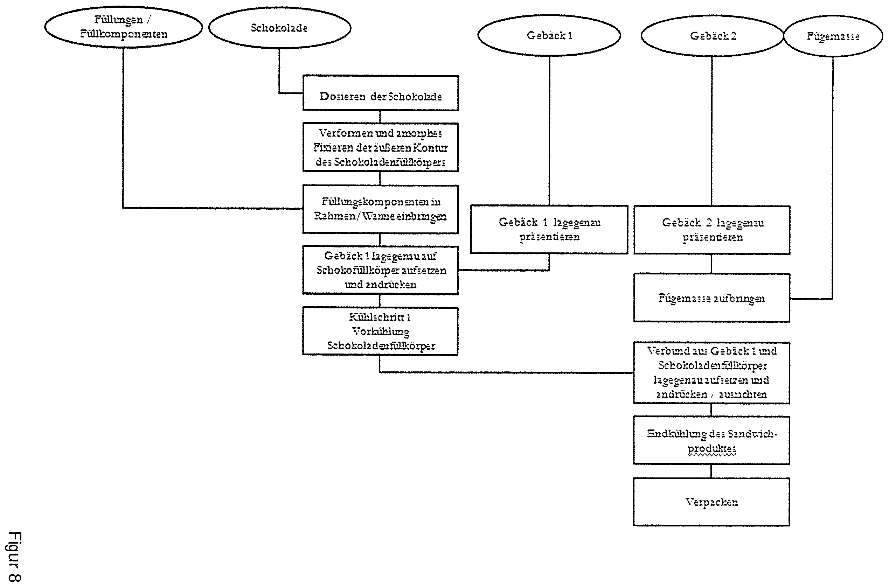

- Figur 8: eine schematische Übersicht über den Ablauf des Verfahrens gemäß einem dritten Ausführungsbeispiel der Erfindung,
- Figur 9: eine schematische Darstellung eines Schokoladenformkörpers gemäß einem ersten Ausführungsbeispiel der Erfindung in Form eines rechteckigen Rahmens,
- Figur 10: eine schematische Darstellung eines Schokoladenformkörpers gemäß einem zweiten Ausführungsbeispiel der Erfindung in Form eines rechteckigen Rahmens mit innenliegenden Querstegen zur Unterteilung von vier Teilkammern,
- Figur 11: eine schematische Darstellung eines Schokoladenformkörpers gemäß einem dritten Ausführungsbeispiel in Form einer rechteckigen Wanne mit innenliegender Kammer,
- Figur 12: eine schematische Darstellung eines Schokoladenformkörpers gemäß einem vierten Ausführungsbeispiel in Form einer rechteckigen Wanne mit innenliegenden oval/rund ausgeführten Stegen zur Unterteilung des innenliegenden Kammervolumens in mehrere Teilkammern,
- Figur 13: eine schematische Darstellung eines Schokoladenformkörpers gemäß einem fünften Ausführungsbeispiel der Erfindung in Form eines kreisförmigen Rahmens,
- Figur 14: eine schematische Darstellung eines Schokoladenformkörpers gemäß einem sechsten Ausführungsbeispiel der Erfindung in Form eines kreisförmigen Rahmens mit innenliegendem Steg zur Unterteilung des innenliegenden Kammervolumens in zwei Kammern,
- Figur 15: eine schematische Darstellung eines figürlichen Schokoladenformkörpers zum Beispiel in Herzform hergestellt entsprechend dem erfindungsgemäßen Verfahren,
- Figur 16: eine schematische Darstellung eines figürlichen Schokoladenformkörpers zum Beispiel in Herzform mit innenliegendem Steg zur Unterteilung des innenliegenden Kammervolumens in zwei Kammern hergestellt entsprechend dem erfindungsgemäßen Verfahren,
- Figur 17: eine schematische Darstellung einer kombinierten Dauerbackware mit zwei Gebäckteilen und einer dazwischenliegenden Füllschicht, die aus einem vorgefertigten Rahmen aus Schokolade mit Schokolade im Center gemäß einem ersten Ausführungsbeispiel der Erfindung besteht,
- Figur 18: eine schematische Darstellung einer kombinierten Dauerbackware mit zwei Gebäckteilen und einer dazwischenliegenden Füllschicht, die aus einem vorgefertigten Rahmen aus Schokolade mit einer im One-Shot-Verfahren dosierten Füllkomponente aus Schokolade und einer weiteren Füllung im Center gemäß einem zweiten Ausführungsbeispiel der Erfindung besteht,
- Figur 19: eine schematische Darstellung einer kombinierten Dauerbackware mit zwei Gebäckteilen und einer dazwischenliegenden Füllschicht, die aus einem vorgefertigten Rahmen aus Schokolade mit stückigen Ingredienzen und einer fetthaltigen Füllung und/oder Schokolade im Center gemäß einem dritten Ausführungsbeispiel der Erfindung besteht,
- Figur 20: eine schematische Darstellung einer kombinierten Dauerbackware mit zwei Gebäckteilen und einer dazwischenliegenden Füllschicht, die aus einem vorgefertigten Rahmen aus Schokolade mit mehreren übereinander schichtweise dosierten Füllungen und Schokolade im Center gemäß einem vierten Ausführungsbeispiel der Erfindung besteht,
- Figur 21: eine schematische Darstellung einer kombinierten Dauerbackware mit zwei Gebäckteilen und einer dazwischenliegenden Füllschicht, die aus einem vorgefertigten Rahmen aus Schokolade mit zwei dosierten Füllungen und Schokolade im Center gemäß einem fünften Ausführungsbeispiel der Erfindung besteht, und
- Figur 22: eine schematische Darstellung einer kombinierten Dauerbackware mit zwei Gebäckteilen und einer dazwischenliegenden Füllschicht, die aus einem vorgefertigtem Rahmen aus Schokolade mit Schokolade im Center, in der sich ein oder mehrere Teilvolumina einer flüssigen, zuckerhaltigen Füllung befinden, gemäß einem sechsten Ausführungsbeispiel der Erfindung besteht.

Das durch die Ansprüche definierte erfindungsgemäße Verfahren gemäß einem Ausführungsbeispiel zeichnet sich durch eine hohe Flexibilität bei der Realisierung unterschiedlicher Produktformen des Schokoladenformkörpers, einen geringeren apparativen Aufwand und einen geringeren Energieaufwand für die Herstellung der Schokoladenformkörper aus. Darüber hinaus eröffnet es die Möglichkeit neben ungefüllten Varianten auch Varianten mit unterschiedlichen Arten von Füllungen oder stückigen Ingredienzen oder anderen stückigen oder pastösen Einlagen zu realisieren.

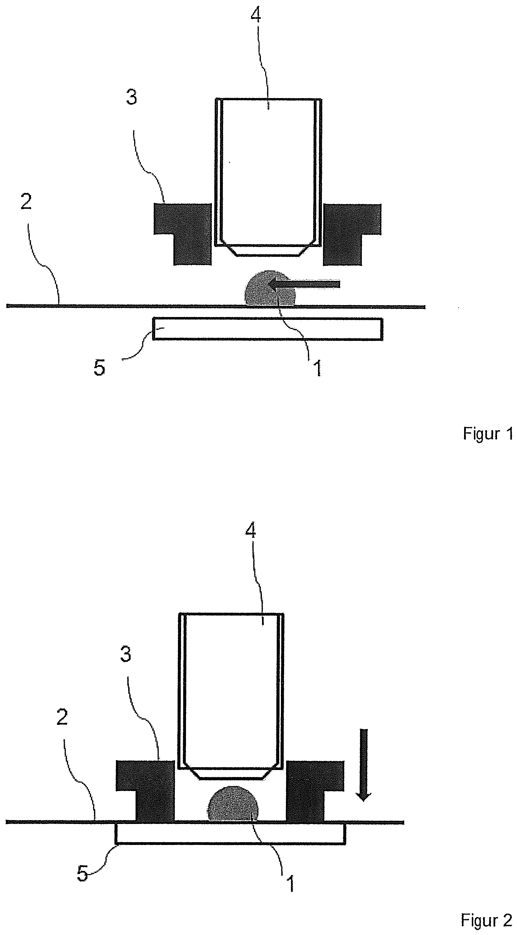

Figur 1 zeigt einen ersten Schritt des Verfahrens gemäß einem Ausführungsbeispiel der Erfindung. Wie in Figur 1 dargestellt ist, wird dazu eine Schokoladenportion 1, die insbesondere vorkristallisierte Schokolade umfasst, auf eine Trägervorrichtung 2, insbesondere auf ein Bandsystem, mittels bekannter Dosiertechnologie in der notwendigen Menge dosiert. Die Schokoladenportion 1 wird insbesondere in Form einer oder mehrerer Punkte dosiert.

In einem zweiten Schritt soll die sich auf der Trägervorrichtung 2 befindliche Schokoladenportion 1 mittels eines stark unterkühlten Werkzeuges geformt. Aus Figur 1 ist ersichtlich, dass ein erstes Formwerkzeug 3 ein zweites Formwerkzeug 4 eng umgibt. Dabei ist das erste Formwerkzeug 3 unabhängig von dem zweiten Formwerkzeug 4 bewegbar.

Wie in Figur 2 dargestellt, wird in einem zweiten Schritt zunächst das erste Formwerkzeug 3 auf die Trägervorrichtung 2 gesenkt, um einen äußeren Rahmen auf der Trägervorrichtung 2 zu bilden. Vorzugsweise wird die Trägervorrichtung durch ein Gegenstück von unten gestützt. Insbesondere wird der Anpressdruck des ersten Formwerkzeugs 3 auf die Trägervorrichtung 2 und die sich darunter befindliche Gegenplatte (Bodenunterstützung) begrenzt, um die Trägervorrichtung (Transportband) 2 nicht zu beschädigen. Das geschieht insbesondere durch eine kraftgesteuerte Fahrweise eines Antriebssystems oder durch eine mittels Federkraft begrenzte maximale Anpresskraft.

Durch das dichte Anliegen des ersten Formwerkzeugs 3 an dem zweiten Formwerkzeug 4 wird somit eine Kammer 6 erzeugt, die durch das erste Formwerkzeug 3, das zweite Formwerkzeug 4 und die Trägervorrichtung 2 begrenzt ist. Daher ist ein Austreten der Schokoladenportion 1 auch bei Aufbringen eines Drucks durch das zweite Formwerkzeug 4 nicht möglich.

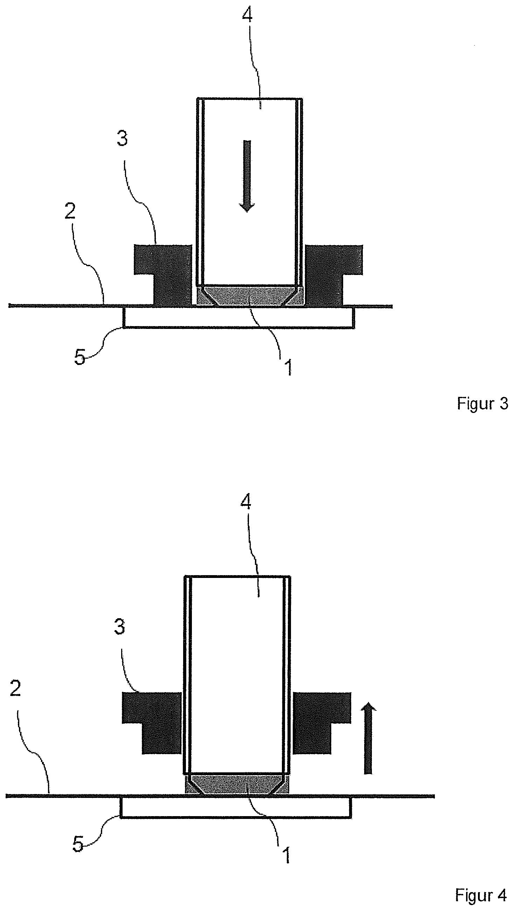

Figur 3 zeigt einen dritten Schritt, in dem das zweite Formwerkzeug 4 auf die Schokoladenportion 1 gesenkt wird. Dadurch wird die Schokoladenportion 1 in der gebildeten Kammer 6 verformt, da die Schokoladenportion insbesondere flüssige Schokolade umfasst. Dazu wird eine Vorschubgeschwindigkeit des zweiten Formwerkzeugs 4 derart gewählt, dass ein vorzeitiges oder teilweises Abkühlen der Schokoladenportion 1 und damit die Ausbildung von Schlieren vermieden wird.

Nach dem Formen der Schokoladenportion 1 zu dem Schokoladenformkörper 6 durch das zweite Formwerkzeug 4 erfolgt eine Haltezeit. Die Haltezeit wird bevorzugt als kurze Zeitspanne gewählt. In dieser Zeitspanne wird Wärme aus dem Schokoladenformkörper 6 abgeführt. Der Schokoladenformkörper 6 verfestigt sich dadurch und liegt zunächst in einem amorphen Zustand vor. Die Haltezeit liegt insbesondere in einem Bereich von 1 bis 10 Sekunden, vorzugsweise im Bereich von 2 bis 3 Sekunden.

Nach Ablauf der Haltezeit wird zunächst das erste Formwerkzeug 3 entfernt, während der Schokoladenformkörper 6 weiter von dem zweiten Formwerkzeug 4 auf der Trägervorrichtung 2 gehalten wird. Dies ist in Figur 4 gezeigt.

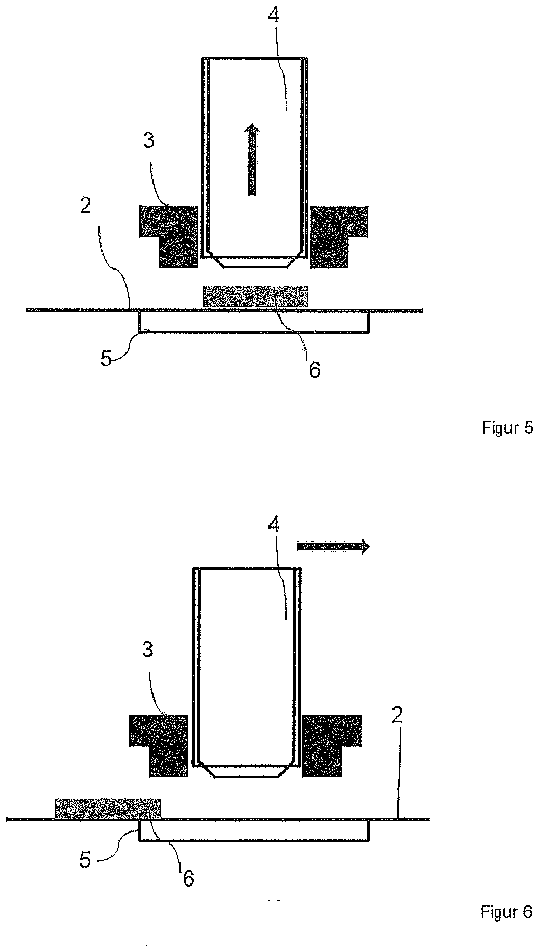

Anschließendes wird das zweite Formwerkzeug 4 angehoben, wie dies in Figur 5 dargestellt ist. Aufgrund der Adhäsion zwischen dem Schokoladenformkörper 6 und der Trägervorrichtung 2 wird ein Abheben des Schokoladenformkörpers 6 vermieden.

Die Dauer des Verfahrens, insbesondere der Haltezeit des zweiten Formwerkzeugs 4 ist variierbar, um das Verfahren einer Vielzahl von Rahmenparametern anzupassen. Derartige Rahmenparameter sind insbesondere:
- die gewünschtn Form
- die Rezeptur der Schokoladenportion 1
- der Vorkristallisationsgrad der Schokoladenportion 1
- die Temperatur des ersten Formwerkzeugs 3 und/oder des zweiten Formwerkzeugs 4
- die Temperatur an der Trägervorrichtung 2 und der Gegenplatte 5
- der gewünschte Grad der Verfestigung.

Die Gestaltung des ersten Formwerkzeuges 3 sowie des zweiten Formwerkzeugs 4 definiert die künftige Form der amorph verfestigten Schokolade. Insbesondere sind mit den unterschiedlichen Formen unterschiedliche Kavitäten des Schokoladenformkörpers 6 und/oder unterschiedliche Umrisse des Schokoladenformkörpers 6 herstellbar.

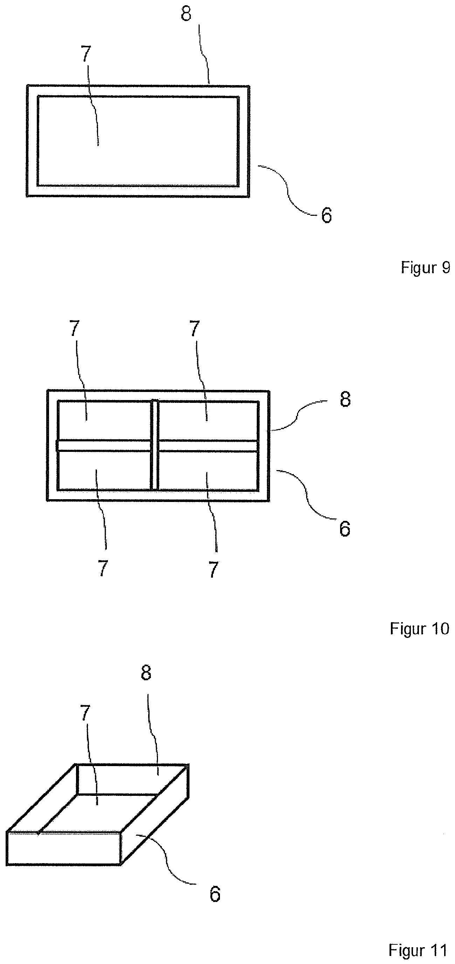

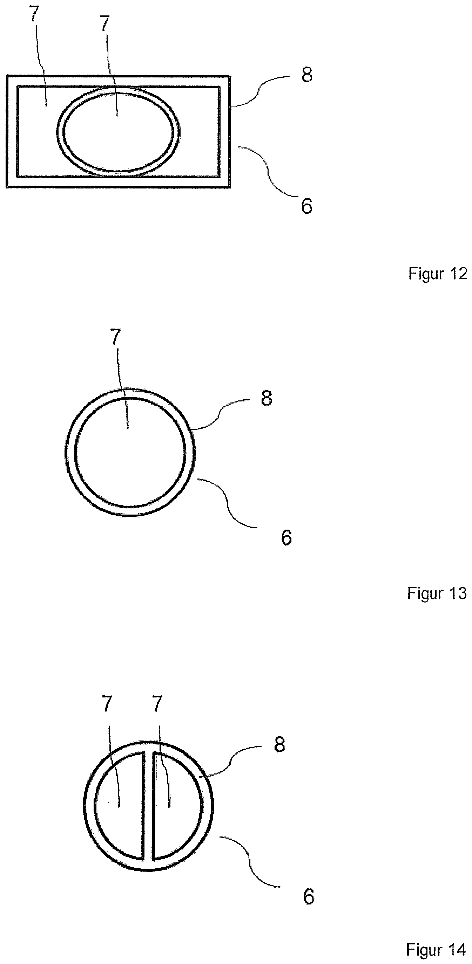

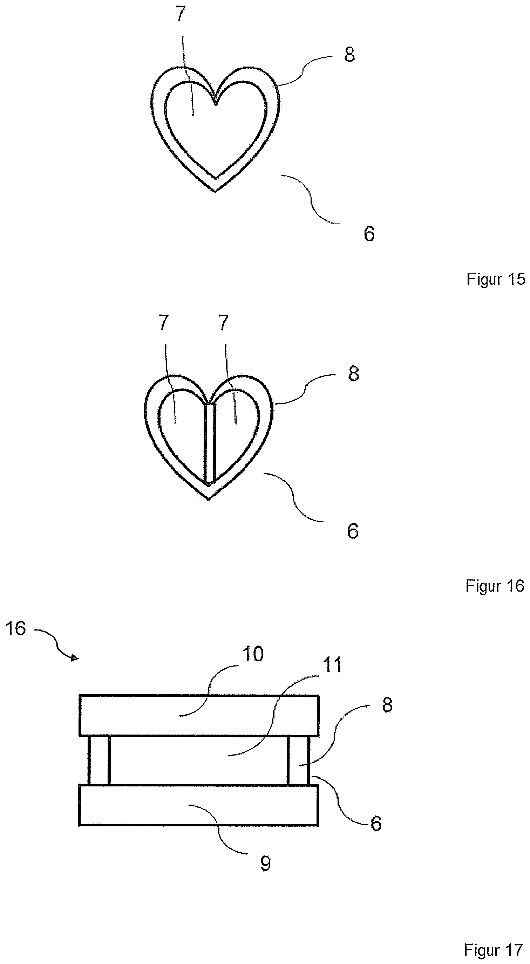

Die Figuren 9 bis 16 zeigen unterschiedliche Ausführungsformen der Vorrichtung zur Herstellung des Schokoladenformkörpers 6, wobei insbesondere die Form des ersten Formwerkzeugs 3 variiert ist. Figur 9 zeigt eine rechteckige erste Form, Figur 10 zeigt eine rechteckige Form mit innenliegenden Stegen. Die Unterteilung ist parallel zu einer langen Seite der rechteckigen Form orientiert. Alternativ ist die Unterteilung auch parallel zu der kurzen Seite der rechteckigen Form orientierbar. Figur 11 zeigt eine rechteckige wannenförmige Form, Figur 12 zeigt eine rechteckige Form mit einem rund oder oval ausgeführten Innensteg und Unterteilung der inneren Kammern. Figur 13 zeigt eine runde Form, Figur 14 zeigt eine runde Form mit einem innenliegenden Steg, die eine Unterteilung aufweist. Figur 15 zeigt eine herzförmig ausgebildete Form. Figur 16 zeigt eine herzförmig ausgebildete Form, die in zwei Kammern durch einen innenliegenden Steg unterteilt ist.

Die Oberflächentemperatur des zweiten Formwerkzeugs 4 ist in weiten Bereichen variierbar. Vorzugsweise liegt diese in einem Bereich von 0°C bis - 20°C im Arbeitspunkt. Insbesondere ist eine Oberflächentemperatur im Arbeitspunkt im Bereich von -25°C bis -15°C vorteilhaft. Der Bereich der Oberflächentemperaturen kann noch weiter variiert werden. So sind auch Oberflächentemperaturen des zweiten Formwerkzeugs 4 oberhalb von 0°C oder unterhalb von -30°C bis -40°C möglich. Das Erreichen von Oberflächentemperaturen unterhalb von -30°C erfordert erhöhte Aufwendungen auf der Seite der Erzeugung, so dass hier die Wirtschaftlichkeit leitet. Bei Oberflächentemperaturen oberhalb ca. -5°C ist die Haltezeit entsprechend länger. Das hat wiederum direkten Einfluss auf den Durchsatz der Vorrichtung zur Herstellung des Schokoladenformkörpers 6.

Zusätzlich zum Abführen der Wärme aus dem Schokoladenformkörper 6 ist bevorzugt unter der Trägervorrichtung 2 eine zusätzliche Kühlung in der Gegenplatte 5 installiert. So wird mit dem Zeitpunkt der Verformung der Schokoladenportion 1 durch das gekühlte erste Formwerkzeug 3 und zweite Formwerkzeug 4 ebenfalls über die Trägervorrichtung 2 und die darunter befindliche gekühlte Gegenplatte Wärme gezielt abgeführt.

Geschieht dies nicht und verfügt die Trägervorrichtung 2 über eine hohe Wärmekapazität und liegt die Temperatur der Trägervorrichtung 2 über der des amorphen Schokoladenformkörpers 6, so kommt es zum Wärmefluss in Richtung des Schokoladenformkörpers 6. Damit einher geht dann die Erweichung des amorph verfestigten Schokoladenformkörpers 6. Das könnte bis zum Fließen und damit der Veränderung der äußeren Kontur führen, welches nicht gewünscht ist.

Nach einer Haltezeit von durchschnittlich 1 bis 3 Sekunden bildet sich der amorph verfestigte und formstabile Schokoladenformkörpers 6 aus. Die Haltezeit ist aber auch bei anderer Wahl der Oberflächentemperatur des zweiten Formwerkzeugs 4 oder der Schokoladenrezeptur variierbar. So sind zum Beispiel Haltzeiten von 1 bis zu 10 Sekunden bei höheren Oberflächentemperaturen des zweiten Formwerkezeug 4 vorgesehen.

Das erfindungsgemäße Verfahren und die Vorrichtung gemäß der gezeigten Ausführungsbeispiele ermöglicht, die Seitenkanten des Schokoladenformkörpers 6 auch senkrecht zum Boden, d.h. zu der Trägervorrichtung 2, auszuformen. Es ist dabei kein Randwinkel von mindestens 4 ° bis 6° oder größer zu berücksichtigen, der bei klassischen Eintafelprodukten nötig ist, um die Schokoladenprodukte aus den Formen auszuformen.

Tabelle 1 zeigt konkrete Parameterkombinationen, mit denen eine Ausformung von wannenartigen Schokoladenformkörpern 6, d.h. Schokoladenformkörper 6 mit einer Kavität, auf einer Fläche von zum Beispiel 60 mm x 30 mm und mit einer Wandungshöhe von 4 mm erfolgen kann. Es sei an dieser Stelle darauf verwiesen, dass sehr unterschiedliche Parameterkombinationen aus Temperaturführung und Haltezeit zum Ziel führen und die hier ausgeführten nur exemplarische dargestellt werden.

**Tabelle 1: Prozessrealisierung zur amorphen Verfestigung von Schokolade mit einem Fettgehalt von 35%**

| | **Versuch 1** | **Versuch 2** | **Versuch 3** |
|---|---|---|---|
| Fettgehalt Schokolade | 34 - 36% | 34 - 36% | 34 - 36% |
| Temperiergrad Schokolade | normal | normal | normal |
| Trägersystem | Gurt PU-M1 0,7 mm | Gurt PU-M1 0,7 mm | Gurt PU-M1 0,7 mm |
| Vorlauftemperatur der Kühlung von erstem Formwerkzeug 3 und zweitem Formwerkzeug 4 | -40°C | -30°C | -35°C |
| Oberflächentemperatur zweites Formwerkezug 4 | ca. -20 ... -22°C | Ca. -15...-18°C | Ca. -18...-20°C |
| Temperatur Kühlung der Trägervorrichtung 2 | -10°C... -15°C | -10°C... -15°C | -10°C ... -15°C |
| Haltedauer des zweiten Formwerkzeugs 4 | 1,5 ... 2,5 s | 2,5... 3,5 s | 2 ... 3s |
| Qualität und Formstabilität des Schokoladenformkörpers | Rahmen gut ausgeformt | Rahmen gut ausgeformt | Rahmen und Wanne gut ausgeformt |

Zu beachten ist weiterhin, dass die gesamte Formungsstation durch geeignete Maßnahmen klimatechnisch von der Umgebung zu trennen ist. Wichtig ist, dass Kondensation, d.h. Taupunktunterschreitung, oder Vereisung auf dem ersten Formwerkzeug 3 und auf dem zweiten Formwerkzeug 4 im Inneren der Vorrichtung vermieden werden.

Die Gestaltung des ersten Formwerkzeuges 3 und des zweiten Formwerkzeugs 4 erfolgt in Abhängigkeit vom gewünschten Produkt und seinem Aufbau. So sind rechteckige Formen ohne oder mit Vertiefungen, Schokoladenwannen, Schokoladenrahmen aber auch andere figürliche Formen erzeugbar. Für die Herstellung von sandwichartigen Dauerbackwaren mit, rechteckigen Formen ist die vorliegende Erfindung ideal.

Der als Rahmen oder Wanne ausgeformte Schokoladenformkörper 6 kann in unterschiedlicher Art und Weise weiterbehandelt und/oder verarbeitet werden. Eine Möglichkeit zur Herstellung eines sandwichartigen flachen Produktes besteht darin, zunächst den Innenbereich des Rahmens bzw. der Wanne mit den gewünschten Komponenten zu füllen. Derartige Komponenten sind insbesondere Schokolade, fetthaltige Füllungen, wasserhaltige Füllungen, die auch mit stückigen Einlagen kombinierbar sind. Dazu kommen im Wesentlichen bekannte Techniken zum Füllen oder Portionieren von flüssigen, pastösen oder stückigen Komponenten zum Einsatz.

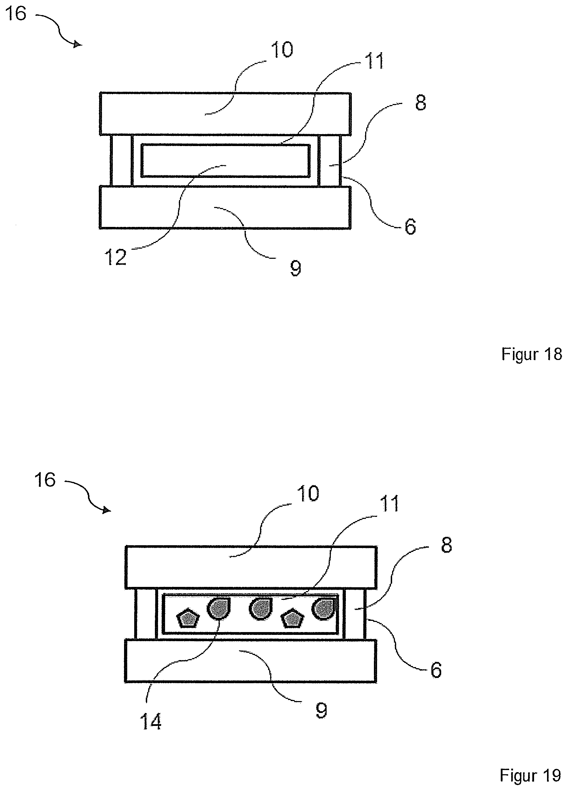

Eine Dauerbackware 16 gemäß einem ersten Beispiel der Erfindung ist in Figur 17 gezeigt. Figur 18 zeigt eine kombinierte Dauerbackware 16, wobei die Dauerbackware 16 zwischen zwei überwiegend flachen Gebäckteilen, einem ersten Gebäckteil 9 und einem zweiten Gebäckteil 10, eine plattenförmige Füllschicht aufweist. Die Füllschicht ist insbesondere ein nach dem oben beschriebenen Verfahren hergestellter Schokoladenformkörper 6, der mit einer Schokolade 11 oder einer Füllung 12 gefüllt ist.

Figur 19 zeigt ein drittes Ausführungsbeispiel der erfindungsgemäßen Dauerbackware 16. Im dritten Ausführungsbeispiel umfasst die Dauerbackware 16 ein erstes Gebäckteil 9 und ein zweites Gebäckteil 10, zwischen denen ein Schokoladenformkörper 6 angeordnet ist. Der Schokoladenformkörper 6 weist zusätzlich stückige Ingredienzen wie zum Beispiel Nüsse, Krokant o.ä. und eine Schokolade 11 als innenliegende Füllung auf.

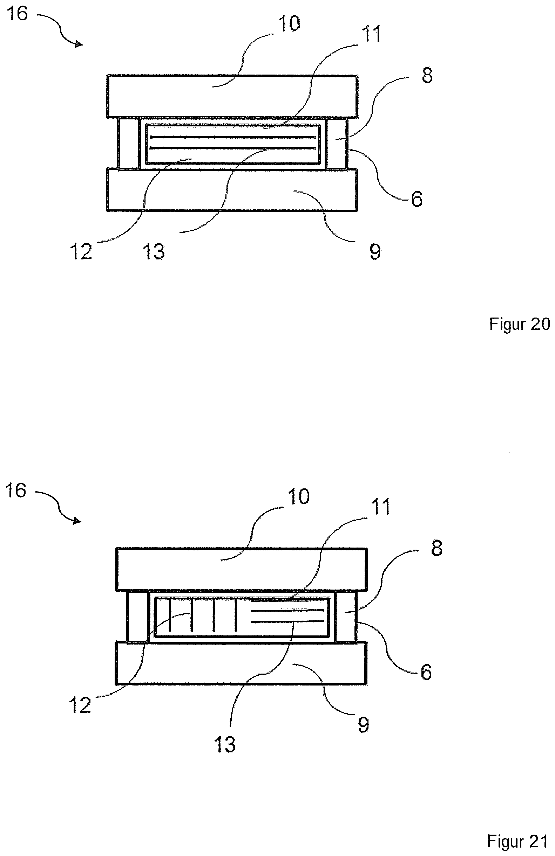

Figur 20 zeigt ein viertes Ausführungsbeispiel der erfindungsgemäßen Dauerbackware 16. Im vierten Ausführungsbeispiel umfasst die Dauerbackware 16 ein erstes Gebäckteil 9 und ein zweites Gebäckteil 10, zwischen denen ein Schokoladenformkörper 6 angeordnet ist. Der Schokoladenformkörper 6 weist mehrere übereinander dosierte Füllungen 12 und Schokolade 11 als innenliegende Füllung auf.

Figur 21 zeigt ein fünftes Ausführungsbeispiel der erfindungsgemäßen Dauerbackware 16. Im fünften Ausführungsbeispiel umfasst die Dauerbackware 16 ein erstes Gebäckteil 9 und ein zweites Gebäckteil 10, zwischen denen ein Schokoladenformkörper 6 angeordnet ist. Der Schokoladenformkörper 6 mehrere übereinander dosierte Füllungen 12 und Schokolade 11 als innenliegende Füllung auf.

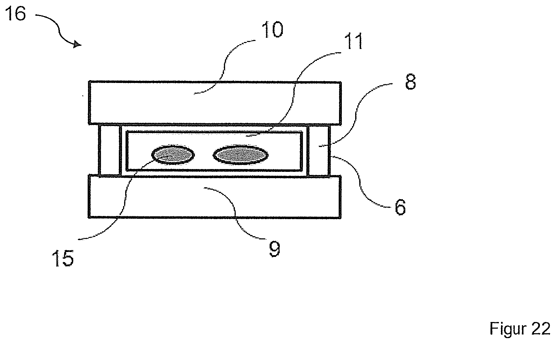

Figur 22 zeigt ein sechstes Ausführungsbeispiel der erfindungsgemäßen Dauerbackware 16. Im sechsten Ausführungsbeispiel umfasst die Dauerbackware 16 ein erstes Gebäckteil 9 und ein zweites Gebäckteil 10, zwischen denen ein Schokoladenformkörper 6 angeordnet ist. Der Schokoladenformkörper 6 weist mehrere übereinander dosierte Füllungen 12 und Schokolade 11 als innenliegende Füllung auf.

Als nächstes wird ein Ausführungsbeispiel zur Herstellung der Dauerbackware gemäß dem ersten Ausführungsbeispiel, die in Figur 17 gezeigt ist, beschrieben.

Auf einer Trägervorrichtung 2 wird eine Schokoladenportion 1 in der für die Ausbildung der Form notwendigen Menge dosiert. Die Temperatur der Trägervorrichtung 2 sollte zu diesem Zeitpunkt vorzugsweise im Bereich -20°C bis maximal Schokoladentemperatur liegen.

Die Trägervorrichtung 2 kann sich kontinuierlich oder intermittierend bewegen. Nachdem die auf die Trägervorrichtung 2 dosierte teilkristallisierte Schokoladenportion 1 das erste Formwerkzeug 3 sowie das zweite Formwerkzeug 4 erreicht hat, erfolgt gemäß der oben dargestellten Beschreibung das Ausformen und Abkühlen der Schokoladenportion 1, so dass amorph verfestigte Schokoladenformkörper 6 entstehen, die auf der Trägervorrichtung 2 weitergefördert werden.

Je nach Produktvarianten kann nun entweder eine zweite Menge Schokolade dosiert und damit die Kavität des Schokoladenformkörpers 6 ausgefüllt werden oder es erfolgt eine Füllung über mehrere Arbeitsschritte. Das kann zunächst das Einstreuen von stückigen Granulaten oder von Nüssen oder Nussstücken o.ä. sein, die danach mit gut fließfähiger Schokolade übergossen werden, wobei die fließfähige Schokolade gleichmäßig in dem als Wanne oder Rahmen ausgeführten Schokoladenformkörper 6 verläuft.

Alternativ kann eine pastöse Einlage aus Marzipan, Nougat oder einer anderen Süßwarenmasse erfolgen, die in einem nachfolgenden Schritt mit Schokolade oder einer fetthaltigen Masse abgedeckt wird. Eine weitere Möglichkeit besteht in dem Dosieren unterschiedlicher Füllungen bzw. Schokoladen nacheinander, wobei jede dieser Füllschichten kurz angekühlt werden kann. Der Innenraum der Wanne kann weiterhin parallel mit zwei oder mehreren Füllungen gefüllt werden, so dass in unterschiedlichen Bereichen der Wanne unterschiedliche Füllungen enthalten sind. Eine weitere Möglichkeit besteht in der Anwendung von One-Shot- oder Triple-Shot-Dressiermaschinen. Damit können Einlagen mit einer oder zwei Füllungen in die ausgeformten Schokoladenformkörper eindosiert werden.

In einem weiteren Schritt wird auf diese noch nicht auskristallisierte Einlage ein erstes Gebäckteil 9 lagegenau und mit leichtem Andruck aufgelegt.

In einem Folgeschritt werden erstes Gebäckteil 9 und unterliegender Schokoladenformkörper 6 in einer geeigneten Kühleinheit so behandelt, dass die Schokolade und/oder die fetthaltigen Füllungen weiter kristallisieren und sich damit der Schokoladenformkörper 6 weiter verfestigt. Weiterhin bildet sich eine feste Verbindung zwischen erstem Gebäckteil 9 und Schokoladenkörper 6 aus, so dass sich Schokoladenkörper 6 und erstes Gebäckteil 9 nicht mehr zerstörungsfrei trennen lassen. In Abhängigkeit der konkreten Dimension und des Gewichts der Kombination aus erstem Gebäckteil 9 und Schokoladenformkörper 6 sind die Kühlzeiten bestimmbar. Für Schokoladenformkörper 6 mit Schichtdicken von 2 bis 5 mm und aufliegenden Gebäckteilen mit Schichtdicken von 4 bis 7 mm werden Mindestkühlzeiten von 15 Minuten bei einer Kühltemperatur von 10 bis 14°C empfohlen. Optimal sind Kühlzeiten von 25 bis 30 Minuten. Zu beachten ist, dass neben der Wahl der Temperatur auch die Luftfeuchtigkeit geeignet einzustellen ist. Vorzugsweise sollte diese unter 40% relativer Feuchte liegen, um die Gebäcktextur nicht nachteilig zu beeinflussen.

Nachdem die Schokolade des Verbundes aus Schokoladenformkörper 6 und erstem Gebäckteil 9 ausreichend kristallisiert ist, wird dieser Verbund von der Trägervorrichtung 2 abgetrennt. Das erfolgt insbesondere über eine Bandkante. Für die Herstellung des Sandwiches ist es nun notwendig, das zweite Gebäckteil 10 zu platzieren, auf dem sich eine nicht oder wenig fließende Masse, insbesondere Schokolade oder eine Fettfüllung, zum Verbinden des zweiten Gebäckteils 10 mit dem Verbund aus Schokoladenformkörper 6 und erstem Gebäckteil 9 befindet. Auf diese vorbereitete Unterlage wird in einem Folgearbeitsschritt der Verbund aus Schokoladenformkörper 6 und erstem Gebäckteil 9 lagegenau aufgesetzt und angedrückt.

In einem letzten Kühlprozess kristallisieren der Schokoladenformkörper 6 und die zur Verbindung von zweitem Gebäckteil 10 und Schokoladenformkörper 6 aufgebrachte Masse aus. Die Dauer des letzten Kühlprozesses hängt wesentlich von dem bereits erreichten Kristallisationszustand des Schokoladenformkörpers 6 ab. Ist die Kristallisation schon sehr weit fortgeschritten, kann der letzte Kühlprozess als Endkühlung entfallen und die Ware direkt der Verpackung zugeführt werden. In diesem Fall entzieht der Schokoladenformkörper 6 der auf dem zweiten Gebäckteil 10 befindlichen Masse die Wärme und es kommt zu einer Verfestigung und Kristallisation der Fette.

Die Vorzüge dieses Verfahrens liegen in dem flexiblen Austausch des ersten Formwerkzeugs 3 sowie des zweiten Formwerkzeugs 4, um unterschiedliche Formen des Schokoladenformkörpers 6 herzustellen. Beim Einsatz eines Mehrfachwerkzeuges bleibt über die gesamte Transportstrecke vom Dosieren, dem Formen, dem Einbringen einer zweiten Füllung, dem Auflegen des ersten Gebäckteils 9 oder der ersten Waffel, einschließlich des Durchlaufens des Kühltunnels bis zum Zusammenfügen des zweiten Gebäckteils 10 oder der zweiten Waffel eine feste Formation erhalten. Somit erfolgen insbesondere positionsgenaue Dosiervorgänge, Formvorgänge und Fügevorgänge. Dies stellt einen großen Vorteil gegenüber herkömmlichen Eintafelanlagen dar.

Gegenüber Eintafelanlagen muss hier kein Plattensatz getauscht werden. Mit der vorgesehenen, einfachen Trägervorrichtung 2 ist ein geringer technischer Aufwand verbunden. Die sonst übliche Lärmbelästigung, hervorgerufen durch den Plattentransport, Ausschlagen, etc., wird für das Bedienpersonal substantiell geringer. Darüber hinaus lassen sich Energiekosten senken, da hier keine Gießformen mit großer Masse gekühlt und wiedererwärmt werden müssen. Bei der Anwendung einer klassischen Eintafeltechnologie für die Herstellung von 1 kg Füllkörpern aus Schokolade (gefüllt oder ungefüllt) mit einer Dimension von 30 mm x 60mm x 4mm ist es notwendig 18 kg Gießformen auf 28°C vorzuwärmen, danach auf ca. 10°C abzukühlen und danach wieder auf 28°C zu erwärmen. Mehr als 90% des Energieaufwandes gehen somit in die Gießformenerwärmung und -kühlung und sind somit reine Verschwendung.

Neben dieser Verfahrensführung sind weitere Möglichkeiten zur Herstellung des gewünschten Produktes gegeben. So kann erst der Schokoladenkörper ausgeformt und gefüllt werden, um anschließend ausreichend auszukristallisieren, bevor die Montageschritte mit den Gebäckteilen 9, 10 erfolgen.

Festzustellen ist schließlich, dass mit dieser Technologie unterschiedlichste gefüllte und ungefüllte Schokoladen- und Süßwarenprodukte hergestellt werden können. So zeigt Figur 19 beispielhaft eine Süßware, die durch den Schokoladenformkörper 6 gebildet ist. Der Schokoladenformkörper 6 ist mit einer ersten Füllung 11 versehen und weist stückige Bestandteile 14 auf. Eine derartige Süßware ist mit dem erfindungsgemäßen Verfahren und/oder der beschriebenen Vorrichtung einfach und kostengünstig herstellbar.

### Bezugszeichenliste

- 1: Schokoladenportion
- 2: Trägervorrichtung/Transportband
- 3: Erstes Formwerkzeug
- 4: Zweites Formwerkzeug
- 5: Bodenunterstützung (Gegenplatte)
- 6: Schokoladenformkörper
- 7: Kammer
- 8: Rahmen-/Konturelement
- 9: Erstes Gebäckteil
- 10: Zweites Gebäckteil
- 11: Schokolade (als Füllkomponente)
- 12: Erste Füllung
- 13: Zweite Füllung
- 14: Stückige Bestandteile
- 15: Flüssige Füllung (zuckerbasierend)
- 16: Dauerbackware

## Patentansprüche

1. Verfahren zur Herstellung eines Schokoladenformkörpers **(6)** als Füllschicht für eine kombinierte Dauerbackware **(16),** umfassend die Schritte:
- Bereitstellen einer Schokoladenportion **(1)** auf einer Trägervorrichtung **(2),**
- Formen der Schokoladenportion **(1)** zu dem, eine äußere Kontur der Füllschicht bildenden Schokoladenformkörper **(6)** mittels eines ersten Formwerkzeugs **(3)** und eines zweiten Formwerkzeugs **(4),** wobei
- durch das erste Formwerkzeug **(3)** eine Form eines Umfangs des Schokoladenformkörpers **(6)** definiert wird, und
- durch das zweite Formwerkzeug **(4)** eine Form einer Kavität des Schokoladenformkörpers **(6)** definiert wird, wobei die Kavität als Rahmen ausgebildet ist,
wobei ein Innenraum der Kavität in mindestens einem folgenden Arbeitsschritt gefüllt wird.

2. Verfahren nach Anspruch 1, **dadurch gekennzeichnet, dass** die Schokoladenportion **(1)** vorkristallisierte Schokolade umfasst.

3. Verfahren nach einem der vorhergehenden Ansprüche, **dadurch gekennzeichnet, dass** die Schokoladenportion **(1)** durch ein erstes Formwerkzeug **(3)** und/oder ein zweites Formwerkzeug **(4)** verformt und durch schnelle Wärmeabfuhr während der Verformung amorph verfestigt wird.

4. Verfahren zur Herstellung einer kombinierten Dauerbackware **(16),** umfassend die Schritte:
- Herstellung eines Schokoladenformkörpers **(6)** gemäß dem Verfahren nach einem der vorhergehenden Ansprüche,
- Bereitstellung zumindest eines ersten Gebäckteils **(9)** und eines zweiten Gebäckteils **(10),**
- Lagegenaue Positionierung des Schokoladenformkörpers **(6),** auf dem ersten Gebäckteil **(9),**
- Einbringung einer Füllmasse **(11, 12, 13)** in die Kavität des Schokoladenformkörpers **(6),**
- Lagegenaue Positionierung des zweiten Gebäckteils **(10)** auf dem gefüllten Schokoladenformkörper **(6),** wobei
- eine Verbindung zwischen Schokoladenformkörper **(6)** und erstem Gebäckteil **(9)** und/oder zweitem Gebäckteil **(10)** durch Kristallisation der Füllmasse **(11, 12, 13)** erfolgt.

5. Verfahren zur Herstellung einer kombinierten Dauerbackware **(16),** umfassend die Schritte:
- Herstellung eines Schokoladenformkörpers **(6)** gemäß dem Verfahren nach einem der Ansprüche 1 bis 3,
- Einbringung einer Füllmasse **(11, 12, 13)** in die Kavität des Schokoladenformkörpers **(6),**
- Bereitstellung zumindest eines ersten Gebäckteils **(9)** und eines zweiten Gebäckteils **(10),**
- Positionierung des ersten Gebäckteils **(9)** über der Kavität des gefüllten Schokoladenformkörpers **(6),** wobei eine Verbindung des ersten Gebäckteils **(9)** mit dem Schokoladenformkörper **(6)** durch Kristallisation der in die Kavität eingebrachten Füllmasse **(11, 12, 13)** erfolgt, und
- Positionierung des zweiten Gebäckteils **(10)** auf einer der Kavität gegenüberliegenden Seite des gefüllten Schokoladenformkörpers **(6),** wobei eine Verbindung des zweiten Gebäckteils **(10)** mit dem Schokoladenformkörper **(6)** durch Kristallisation einer zwischen Schokoladenformkörper **(6)** und zweitem Gebäckteil **(10)** eingebrachten Fügemasse erfolgt.

6. Schokoladenformkörper, **dadurch gekennzeichnet, dass** dieser mit einem Verfahren nach einem der Ansprüche 1 bis 3 hergestellt ist und mit zumindest einem festen und/oder zumindest einem halbfesten und/ oder zumindest einem flüssigen Bestandteil gefüllt ist.

7. Schokoladenformkörper nach Anspruch 6, **dadurch gekennzeichnet, dass** dieser mit Schokolade und/oder mit fetthaltigen Füllmassen und/oder mit wasserhaltigen Füllmassen und/oder mit stückigen Bestandteilen gefüllt ist.

8. Schokoladenformkörper nach einem der Ansprüche 6 oder 7, **dadurch gekennzeichnet, dass** der Schokoladenformkörper **(6)** eine festes und/oder formstabiles Element ist.

9. Dauerbackware **(16),** umfassend einen Schokoladenformkörper **(6)** nach einem der Ansprüche 6 bis 8.

10. Dauerbackware nach Anspruch 9, **dadurch gekennzeichnet, dass** zumindest ein, insbesondere flaches, Gebäckteil **(9, 10)** auf dem Schokoladenformkörper **(6)** positioniert ist.

11. Dauerbackware nach einem der Ansprüche 9 oder 10, **dadurch gekennzeichnet, dass** äußere Konturflächen des Schokoladenformkörpers **(6)** plan sind und senkrecht zu dem ersten Gebäckteil **(9)** und/oder dem zweiten Gebäckteil **(10)** orientiert sind.

12. Dauerbackware nach einem der Ansprüche 9 bis 11, **dadurch gekennzeichnet, dass** eine Verbindung des Schokoladenformkörpers **(6)** mit einem ersten Gebäckteil **(9),** das insbesondere über der Kavität des Schokoladenformkörpers positioniert ist, durch Kristallisation einer in die Kavität eingebrachten Füllmasse erfolgt und/oder eine Verbindung des Schokoladenformkörpers (6) mit einem zweiten Gebäckteil **(10),** das insbesondere auf einer der Kavität gegenüberliegenden Seite des Schokoladenformkörpers **(6)** positioniert ist, durch Kristallisation einer zwischen Schokoladenformkörper **(6)** und zweitem Gebäckteil **(10)** eingebrachten Füllmasse erfolgt.

## Claims

1. Method of producing a chocolate moulded body (6) as a filling layer for a combined long-life baked product (16), comprising the steps:
- provision of a chocolate portion (1) on a carrier device (2),
- shaping the chocolate portion (1) into the chocolate moulded body (6) forming an outer contour of the filling layer by means of a first moulding tool (3) and a second moulding tool (4), wherein
- a shape of a circumference of the chocolate moulded body (6) is defined by the first moulding tool (3) and
- a shape of a cavity of the chocolate moulded body (6) is defined by the second moulding tool (4), wherein the cavity is formed as a frame,
wherein an inner space of the cavity is filled in at least one following work step.

2. Method according to claim 1, **characterised in that** the chocolate portion (1) comprises pre-crystallised chocolate.

3. Method according to any one of the preceding claims, **characterised in that** the chocolate portion (1) is deformed by a first moulding tool (3) and/or a second moulding tool (4) and is amorphously solidified by rapid heat dissipation during deformation.

4. Method of producing a combined long-life baked product (16), comprising the steps:
- producing a chocolate moulded body (6) according to the method according to any one of the preceding claims,
- providing at least one first biscuit part (9) and a second biscuit part (10),
- accurately positioning the chocolate moulded body (6) on the first biscuit part (9),
- introducing a filling mass (11, 12, 13) into the cavity of the chocolate moulded body (6),
- accurately positioning the second biscuit part (10) on the filled chocolate moulded body (6), wherein a connection takes place between chocolate moulded body (6) and first biscuit part (9) and/or second biscuit part (10) by crystallisation of the filling mass (11, 12, 13).

5. Method of producing a combined long-life baked product (16), comprising the steps:
- producing a chocolate moulded body (6) according to the method according to any one of claims 1 to 3,
- introducing a filling mass (11, 12, 13) into the cavity of the chocolate moulded body (6),
- providing at least one first biscuit part (9) and a second biscuit part (10),
- positioning the first biscuit part (9) over the cavity of the filled chocolate moulded body (6), wherein a connection of the first biscuit part (9) with the chocolate moulded body (6) takes place by crystallisation of the filling mass (11, 12, 13) introduced into the cavity, and
- positioning the second biscuit part (10) on a side of the filled chocolate moulded body (6) opposed to the cavity, wherein a connection of the second biscuit part (10) with the chocolate moulded body (6) takes place by crystallisation of a joining mass introduced between chocolate moulded body (6) and the second biscuit part (10).

6. Chocolate moulded body, **characterised in that** it is produced with a method according to any one of claims 1 to 3 and is filled with at least one solid and/or at least one semi-solid and/or at least one liquid constituent.

7. Chocolate moulded body according to claim 6, **characterised in that** it is filled with chocolate and/or with filling masses containing fat and/or with filling masses containing water and/or with lumpy constituents.

8. Chocolate moulded body according to any one of claims 6 or 7, **characterised in that** the chocolate moulded body (6) is a solid and/or dimensionally-stable element.

9. Long-life baked product (16), comprising a chocolate moulded body (6) according to any one of claims 6 to 8.

10. Long-life baked product according to claim 9, **characterised in that** at least one, in particular flat, biscuit part (9, 10) is positioned on the chocolate moulded body (6).

11. Long-life baked product according to any one of claims 9 or 10, **characterised in that** outer contour surfaces of the chocolate moulded body (6) are flat and are oriented perpendicular to the first biscuit part (9) and/or the second biscuit part (10).

12. Long-life baked product according to any one of claims 9 to 11, **characterised in that** a connection of the chocolate moulded body (6) to a first biscuit part (9), which is in particular positioned over the cavity of the chocolate moulded body, takes place by crystallisation of a filling mass introduced into the cavity and/or a connection of the chocolate moulded body (6) to a second biscuit part (10), which is in particular positioned on a side of the chocolate moulded body (6) opposed to the cavity, takes place by crystallisation of a joining mass introduced between chocolate moulded body (6) and second biscuit part (10).

## Revendications

1. Procédé de fabrication d'un corps moulé en chocolat (6) en tant que couche de fourrage pour un produit de pâtisserie combiné de longue conservation (16), comprenant les étapes de :
- mise à disposition d'une portion de chocolat (1) sur un dispositif de support (2),
- moulage de la portion de chocolat (1) en corps moulé en chocolat (6) formant un contour extérieur de la couche de fourrage au moyen d'un premier outil de moulage (3) et d'un second outil de moulage (4), dans lequel
- une forme d'une circonférence du corps moulé en chocolat (6) est définie par le premier outil de moulage (3), et
- une forme d'une cavité du corps moulé en chocolat (6) est définie par le second outil de moulage (4), dans lequel la cavité est réalisée sous forme de cadre,
dans lequel un espace intérieur de la cavité est rempli dans au moins une étape successive.

2. Procédé selon la revendication 1, **caractérisé en ce que** la portion de chocolat (1) comprend du chocolat précristallisé.

3. Procédé selon l'une quelconque des revendications précédentes, **caractérisé en ce que** la portion de chocolat (1) est déformée par un premier outil de moulage (3) et/ou un second outil de moulage (4) et solidifiée de manière amorphe par une dissipation de chaleur rapide pendant la déformation.

4. Procédé de fabrication d'un produit de pâtisserie combiné de longue conservation (16), comprenant les étapes de :
- fabrication d'un corps moulé en chocolat (6) selon le procédé selon l'une quelconque des revendications précédentes,
- mise à disposition d'au moins une première partie de biscuit (9) et une seconde partie de biscuit (10),
- positionnement exact du corps moulé en chocolat (6), sur la première partie de biscuit (9),
- introduction d'une masse de fourrage (11, 12, 13) dans la cavité du corps moulé en chocolat (6),
- positionnement exact de la seconde partie de biscuit (10) sur le corps moulé en chocolat (6) rempli, dans lequel
une liaison entre le corps moulé en chocolat (6) et la première partie de biscuit (9) et/ou la seconde partie de biscuit (10) a lieu par cristallisation de la masse de fourrage (11, 12, 13).

5. Procédé de fabrication d'un produit de pâtisserie combiné de longue conservation (16), comprenant les étapes de :
- fabrication d'un corps moulé en chocolat (6) selon le procédé selon l'une quelconque des revendications 1 à 3,
- introduction d'une masse de fourrage (11, 12, 13) dans la cavité du corps moulé en chocolat (6),
- mise à disposition d'au moins une première partie de biscuit (9) et une seconde partie de biscuit (10),
- positionnement de la première partie de biscuit (9) au-dessus de la cavité du corps moulé en chocolat (6) rempli, dans lequel une liaison de la première partie de biscuit (8) au corps moulé en chocolat (6) a lieu par cristallisation de la masse de fourrage (11, 12, 13) introduite dans la cavité, et
- positionnement de la seconde partie de biscuit (10) sur un côté opposé à la cavité du corps moulé en chocolat (6) rempli, dans lequel une liaison de la seconde partie de biscuit (10) au corps moulé en chocolat (6) a lieu par cristallisation d'une masse d'assemblage introduite entre le corps moulé en chocolat (6) et la seconde partie de biscuit (10).

6. Corps moulé en chocolat, **caractérisé en ce que** celui-ci est fabriqué avec un procédé selon l'une quelconque des revendications 1 à 3 et est rempli avec au moins un composant solide et/ou au moins un composant semi-solide et/ou au moins un composant liquide.

7. Corps moulé en chocolat selon la revendication 6, **caractérisé en ce que** celui-ci est rempli avec du chocolat et/ou avec des masses de fourrage grasses et/ou avec des masses de fourrage contenant de l'eau et/ou avec des composants sous forme de morceaux.

8. Corps moulé en chocolat selon l'une quelconque des revendications 6 ou 7, **caractérisé en ce que** le corps moulé en chocolat (6) est un élément solide et/ou de forme stable.

9. Produit de pâtisserie de longue conservation (16), comprenant un corps moulé en chocolat (6) selon l'une quelconque des revendications 6 à 8.

10. Produit de pâtisserie de longue conservation selon la revendication 9, **caractérisé en ce qu'au** moins une partie de biscuit (9, 10), en particulier plate est positionnée sur le corps moulé en chocolat (6).

11. Produit de pâtisserie de longue conservation selon l'une quelconque des revendications 9 ou 10, **caractérisé en ce que** des surfaces de contour extérieures du corps moulé en chocolat (6) sont planes et orientées perpendiculairement à la première partie de biscuit (9) et/ou à la seconde partie de biscuit (10).

12. Produit de pâtisserie de longue conservation selon l'une quelconque des revendications 9 à 11, **caractérisé en ce qu'**une liaison du corps moulé en chocolat (6) à une première partie de biscuit (9), qui est positionnée en particulier au-dessus de la cavité du corps moulé en chocolat, a lieu par cristallisation d'une masse de fourrage introduite dans la cavité et/ou une liaison du corps moulé en chocolat (6) à une seconde partie de biscuit (10), qui est positionnée en particulier sur un côté opposé à la cavité du corps moulé en chocolat (6), a lieu par cristallisation d'une masse d'assemblage introduite entre le corps moulé en chocolat (6) et la seconde partie de biscuit (10).
